# EUROPÄISCHE PATENTSCHRIFT

(11) **EP 0 443 477 B1**
(45) Veröffentlichungstag und Bekanntmachung des Hinweises auf die Patenterteilung: **01.09.1993**
(21) Anmeldenummer: 91102253.1
(22) Anmeldetag: 18.02.1991
(51) Int. Cl.: G01J 3/45

(54) **Interferometer nach Michelson zur Erzeugung optischer Wegunterschiede**
Michelson type interferometer for the generation of optical path differences
Interféromètre de Michelson pour la génération des trajets optiques différents

(30) Priorität: 21.02.1990 DE 4005491; 26.04.1990 DE 4013399
(43) Veröffentlichungstag der Anmeldung: 28.08.1991
(73) Patentinhaber: Deutsche Forschungsanstalt für Luft- und Raumfahrt e.V., 51126 Köln (DE)
(72) Erfinder: Tank, Volker Dr., W-8088 Eching a.A (DE); Dietl, Helmut, W-8000 München 19 (DE); Haschberger,Peter, W-8000 München 2 (DE); Mayer, Oliver, W-8014 Neubiberg (DE)
(74) Vertreter: von Kirschbaum, Albrecht, Dipl.-Ing.

(56) Entgegenhaltungen:
- DE-A- 3 346 455
- DE-A- 3 446 014
- DE-A- 3 736 694
- DE-C- 3 431 040
- US-A- 4 881 814
- MIKROCHIMICA ACTA, vol. 2, No. 1-6, 1988 V. TANK "Pathlength Alter- ation in an Interferometer by Rotation of a Retroreflector" Seiten 319-321

## Beschreibung

Die Erfindung betrifft Interferometer nach Michelson zur Erzeugung optischer Wegunterschiede.

Bei einem klassischen Interferometer nach Michelson wird ein Interferogramm, d. h. die Fourier-Transformierte des Spektrums der Strahlung erzeugt, indem die zu untersuchende Strahlung in amplitudengleiche Hälften geteilt wird und diese Hälften nach Durchlaufen getrennter Wege wieder zusammengeführt und auf einen Strahlungsdetektor gelenkt werden. Dabei wird durch stetige oder schrittweise Änderung der Länge des einen Wegs ein Wegunterschied und damit eine sich ändernde Phase zwischen beiden Strahlungshälften erzeugt. Die Änderung der Weglänge ist durch eine Linearverschiebung eines Spiegels erreicht.

Bei einer Weiterentwicklung, welche beispielsweise in DE 34 31 040 C2 oder in dem EP-Patent 0146 768 B1 beschrieben ist, ist die Linearbewegung des Spiegels durch eine Rotationsbewegung, und zwar durch eine Nutation eines Retroreflektors ersetzt, dessen Rotationsachse exzentrisch angeordnet und bezüglich der optischen Achse, d.h. der Ausbreitungsrichtung der zu untersuchenden Strahlung, geneigt ist. Die spektrale Auflösung dieser bekannten Interferometer ist proportional zur Achsneigung und zur Exzentrizität des rotierenden Reflektors. Das wiederum bedeutet, für einen Retroreflektor bestimmten Durchmessers ist die Brauchbarkeit der gesamten Anordnung durch diese beiden Parameter begrenzt. Eine zu starke Achsneigung führt beispielsweise dazu, daß die Strahlung die Anordnung in unerwünschter Weise verläßt, während eine zu starke Exzentritzität den nutzbaren Strahldurchmesser reduziert. Ebenso ist die spektrale Auflösung durch den Durchmesser des Retroreflektors begrenzt.

Nachteilig bei diesen Geräten ist somit, daß Reflektoren mit großer Apertur verwendet werden müssen, wenn eine hohe spektrale Auflösung gewünscht wird. Da die Reflektoren grundsätzlich von hoher optischer Qualität sein müssen, steigt der Aufwand mit zunehmender Apertur. Darüber hinaus erfordern große Reflektoren, insbesondere für hohe Drehzahlen, eine sehr präzise Auswuchtung und haben dadurch beinahe zwangsläufig größere und insgesamt schwerere Geräte zur Folge.

Weiterhin ist nachteilig, daß die Einstellung einer geringeren als der maximalen Auflösung nur durch Änderung der Achsneigung oder der Exzentrizität des rotierenden Retroreflektors erreichbar ist. Hierzu sind mechanische Einstellungen nötig; außerdem werden dadurch auch die Signalfrequenzen geändert. Wird nämlich bei konstanter Drehzahl ein geringerer Wegunterschied erzeugt, so wird in gleicher Zeit ein kleinerer Teil des Interferogramms erzeugt, dessen Signalfrequenzen niedriger sind. Darüber hinaus ist auch die elektronische Signalfilterung diesem Umstand anzupassen.

Aufgabe der Erfindung ist es daher, ein modulares Interferometer nach Michelson zu schaffen, bei welchem mit einem verhältnismäßig geringen Aufwand bei den einzelnen optischen Komponenten eine Steigerung der Wegdifferenz und der spektralen Auflösung erreichbar ist, und bei welchem die Auflösung mit kleinem Aufwand ein- bzw. verstellbar ist.

Gemäß der Erfindung ist diese Aufgabe bei Michelson-Interferometern nach den Ansprüche 1, 3, 5, 6 und 10 erreicht. Vorteilhafte Weiterbildungen des erfindungsgemäßen Interferometers sind Gegenstand der abhängigen Ansprüche.

Bei dem modularen Interferometer gemäß der Erfindung kann durch die Verwendung von mehreren kleineren Retroreflektoren dieselbe spektrale Auflösung erreicht werden, wie bisher durch weniger, jedoch große Retroreflektoren. Vorteilhaft bei den kleinen Retroreflektoren ist jedoch, daß sie erheblich preiswerter als große Retroreflektoren sind und obendrein auch erheblich einfacher auszuwuchten sind.

In einer vorteilhaften Weiterbildung sind die die Antriebe von mindestens einem Paar Retroreflektoren so synchronisiert, daß im Normalbetrieb für die größtmögliche spektrale Auflösung der Wechsel zwischen maximalem und minimalem Weg in den beiden Armen gegenphasig (180°) verläuft. Ferner sind die Antriebe so regulierbar, daß diese Phase zwischen 180° bis 0° veränderbar ist. Dadurch ist eine stufenlose Einstellung der Wegdifferenz und damit auch der spektralen Auflösung möglich; bei einer Phase von 0° ist dann die Wegdifferenz null. Um konstante Signalfrequenzen zu erhalten, wird die Drehgeschwindigkeit der Retroreflektoren im gleichen Maße heraufgesetzt, wie deren Phase verringert wird, und umgekehrt. Der vorstehend angesprochene Fall einer Phase von 0° ist bei der Drehzahlregulierung ausgenommen, da in diesem Fall die Drehzahl unendlich sein müßte und außerdem eine Messung sinnlos wäre.

Eine derartige Phasensteuerung kann beispielsweise dann, wenn als Antrieb für die beiden Retroreflektoren zwei Schrittmotoren verwendet werden, über diese Schrittmotore erfolgen. Hierbei wird durch schrittweises Schalten nur eines der beiden Motore die Phase eingestellt. Im Betrieb werden dann die beiden Motore synchron betrieben, indem sie einfach von demselben Pulsgenerator angesteuert werden. Zur Erzeugung konstanter Signalfrequenzen ist die Impulsfrequenz und damit die Drehgeschwindigkeit der Retroreflektoren der Phase angepaßt. So ist beispielsweise bei einer Phase von 90° diese Drehgeschwindigkeit doppelt so hoch einzustellen, wie bei einer Phase von 180°.

Gemäß einer abgewandelten, vereinfachten Ausführungsform der Erfindung sind nur zwei rotierende Reflektoren in Form von Tripelspiegeln auf einer gemeinsamen Drehachse montiert, und bezüglich ihrer Neigung und hinsichtlich eines Versatzes in bezug auf diese Drehachse so zueinander eingestellt, daß sich wechselweise in dem Arm der optische Weg verlängert, während er sich in dem anderen Arm verkürzt, und umgekehrt. Bei dieser Ausführungsform werden die Retroreflektoren nur durch einen Motor angetrieben, wodurch ein besonders präziser Gleichlauf erreichbar oder anders ausgedrückt, die Wegänderungen in den beiden Armen sind dadurch aneinander gekoppelt, so daß die Änderung der Wegdifferenz kontinuierlich und damit nur eine ganz bestimmte Auflösung erfolgt. In einem mittels des erfindungsgemäßen Interferometers erzeugten Interferogramm sind daher die Signalfrequenzen sehr konstant, was für die weitere Verarbeitung beispielsweise durch eine Fouriertransformation besonders vorteilhaft ist und eine derartige Verarbeitung erst sinnvoll macht. Außerdem läßt sich diese bevorzugte Ausführungsform des erfindungsgemäßen Interferometers in einfacher Weise bequem auswuchten.

Nachfolgend wird die Erfindung anhand von Ausführungsformen unter Bezugnahme auf die anliegenden Zeichnungen im einzelnen erläutert. Es zeigen:
- Fig.1: eine Ausführungsform eines aus Modulen nach Fig.2 bis 4 aufgebauten Interferometers;
- Fig.2: ein Eingangs-/Ausgangsmodul des modularen Interferometers;
- Fig.3: ein Zwischenmodul des Interferometers mit zwei rotierenden und zwei feststehenden Retroreflektoren;
- Fig.4: ein Abschlußmodul des Interferometers mit zwei rotierenden Retroreflektoren;
- Fig.5: ein gegenüber der Ausführungsform der Fig.3 abgewandeltes Zwischenmodul Interferometers mit vier rotierenden Retroreflektoren,
- Fig.6: ein dem abgewandeltem Zwischenmodul nach Fig.5 angepaßtes Abschlußmodul des Interferometers mit zwei rotierenden Retroreflektoren,
- Fig.7: eine abgewandelte Ausführungsform eines Interferometers mit nur zwei zueinander geneigten, um gesonderte Drehachsen rotierenden Reflektoren;
- Fig.8: eine Ausführungsform eines Interferometers mit ebenfalls nur zwei um eine gemeinsame Drehachse rotierenden Reflektoren, und
- Fig.9: noch eine weitere Ausführungsform eines Interferometers mit nur zwei um eine gemeinsame Drehachse rotierenden Retroreflektoren.

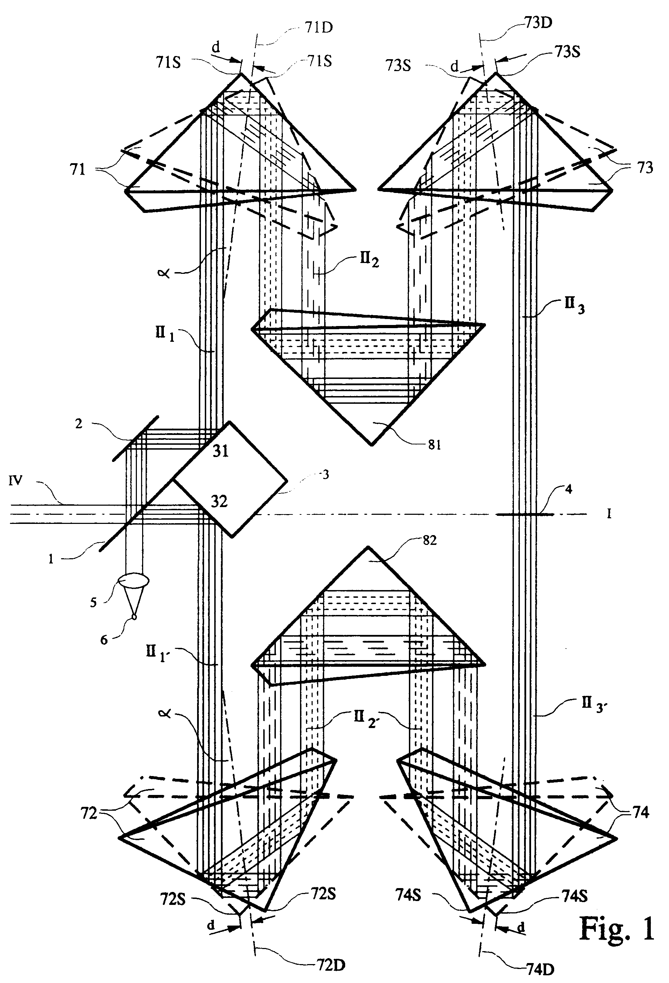

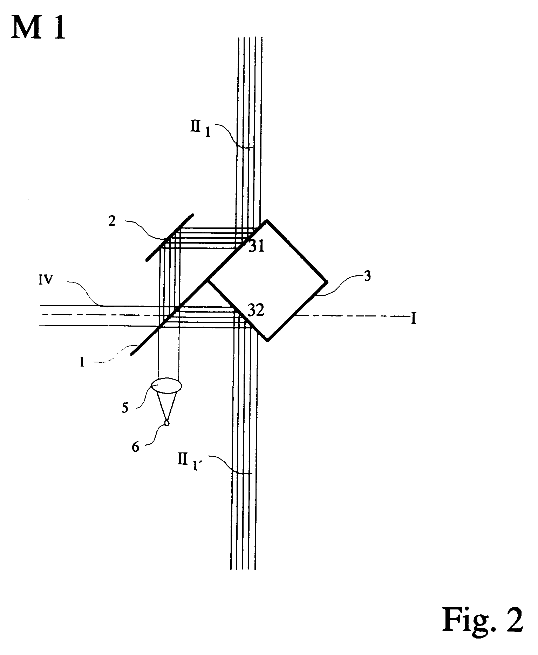

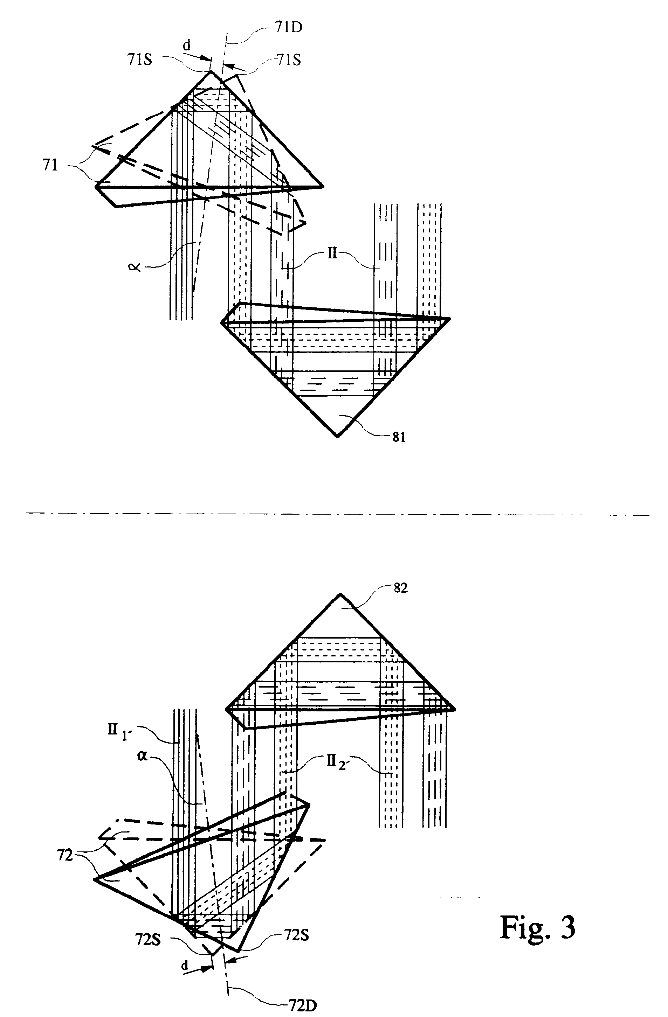

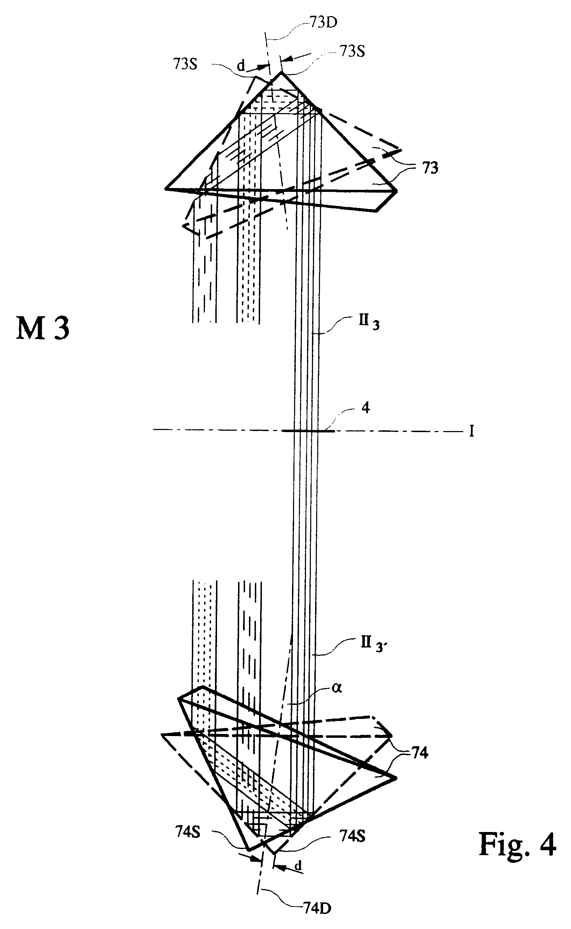

Ein in Fig.1 dargestelltes Interferometer ist aus insgesamt drei in den Fig.2 bis 4 wiedergegebenen Modulen, nämlich einem Eingangs-/Ausgangsmodul M1 (Fig.2), einem Zwischenmodul M2 (Fig.3) und einem entsprechenden Abschlußmodul M3 (Fig.4) zusammengesetzt.

Hierbei weist das in Fig.2 wiedergegebene Eingangs-/Ausgangsmodul M1 einen Strahlteiler 1, einen Umlenkspiegel 2, einen außenverspiegelten Winkelspiegel 3 in Form von zwei um 90° gegeneinander versetzten Planspiegeln 31 und 32, eine Sammellinse 5 und einen Strahlungsdetektor 6 auf. Hierbei ist der Planspiegel 31 des Winkelspiegels 3 fluchtend mit dem unter 45° zu einer Symmetrieachse I ausgerichteten Strahlteiler 1 angeordnet. Der Umlenkspiegel 2 ist parallel zu dem Strahlteiler 1 und dem mit diesem fluchtenden Planspiegel 31 des Winkelspiegels 3 und somit auch unter einem Winkel von 45° bezüglich der Symmetrieebene I angeordnet. Der zweite Planspiegel 32 des Winkelspiegels 3 ist senkrecht zu dem ersten Planspiegel 31 und damit auch senkrecht zu dem Strahlteiler 1 angeordnet. Die Sammellinse 5 ist senkrecht unter dem Strahlteiler 1 so angeordnet, daß ein auf sie auftreffendes Strahlenbündel auf den nachgeordneten Strahlungsdetektor 6 fokussiert wird.

Das in Fig. 3 dargestellte Zwischenmodul weist zwei rotierende Retroreflektoren 71 und 72 sowie zwei feststehende Retroreflektoren 81 und 82 auf. Hierbei sind die beiden spiegelbildlich zur Symmetrieebene I angeordneten, rotierenden Retroreflektoren 71 und 72 mit ihren Aperturen einander zugewandt. Die zwei feststehenden Retroreflektoren 81 und 82 sind ebenfalls spiegelbildlich zur Symmetrieebene I jedoch so angeordnet, daß ihre Rückseiten einander zugewandt sind. Die auf die eintreffenden Strahlen bezogenen, eingangsseitigen Aperturhälften der beiden feststehenden Retroreflektoren 81 und 82 sind jeweils auf eine der ausgangsseitigen Aperturhälften der beiden rotierenden Reflektoren 71 bzw. 72 ausgerichtet.

Ferner sind die Drehachsen 71D und 72D der beiden rotierenden Reflektoren 71 und 72 jeweils bezüglich ihrer in der Retroreflektorenspitze liegenden Zentren 71S und 72S seitlich um denselben Abstand d versetzt. Die Drehachsen 71D und 72D der beiden Retroreflektoren 71 und 72 verlaufen jeweils vorzugsweise parallel zu den durch die Symmetriezentren 71S bzw. 72S geführten (nicht näher dargestellten) Symmetrieachsen der beiden Retroreflektoren 71 und 72. Ferner schließen die Drehachsen 71D und 72D einen Winkel α mit der jeweiligen optischen Achse II₂ bzw. II_{2'} der beiden Retroreflektoren 71 und 72 ein.

Das Abschlußmodul M3 weist zwei weitere, rotierende Retroreflektoren 73 und 74 und eine beidseitig verspiegelte, planparallele Platte 4 auf. Hierbei sind auch die zwei weiteren, rotierenden Retroreflektoren 73 und 74 wieder spiegelbildlich zur Symmetrieebene I so angeordnet, daß sie mit ihren Aperturen einander zugewandt sind. Die auf die austretenden Strahlen bezogenen, ausgangsseitigen Hälften der beiden rotierenden Retroreflektoren 73 und 74 sind so ausgerichtet, daß die jeweiligen Aperturhälften jeweils gegenüber der entsprechenden Spiegelfläche der planparallelen Platte 4 angeordnet sind, die ihrerseits fluchtend in der Symmetrieebene I liegt. Die Drehachsen 73D und 74D auch dieser beiden rotierenden Retroreflektoren 73 und 74 sind jeweils bezüglich ihrer die Spitzen der Retroreflektoren darstellenden Zentren 73S und 74S seitlich um denselben Abstnd d versetzt. Ferner verlaufen die Drehachsen 73D und 74D vorzugsweise parallel zu den (nicht näher eingetragenen) Symmetrieachsen der Retroreflektoren 73 und 74 und bilden mit den jeweiligen optischen Achsen II₃ bzw. II_{3'} der rotierenden Retroreflektoren 73 und 74 einen Winkel α. In den Zeichnungen ist zur besseren Übersicht die Drehachse um einen nicht näher bezeichneten Winkel zur Symmetrieachse geneigt angeordnet.

Wenn, wie in Fig.1 dargestellt und eingangs erwähnt, die drei in Fig.2 bis 4 dargestellten und vorstehend beschriebenen Module ihrer Bestimmung gemäß einander zugeordnet und paßgenau fest miteinander verbunden werden, kann aus diesen drei Modulen M1 bis M3 ein modulares Interferometer gemäß der Erfindung gebildet werden. In diesem Fall sind dann die um 90° gegeneinander versetzten Planspiegel 31 und 32 des Winkelspiegels 3 des Eingangs-/Ausgangsmoduls M1 jeweils gegenüber einer eingangsseitigen Aperturhälfte der beiden Retroreflektoren 71 und 72 des Zwischenmoduls M2 und zwischen die Retroreflektoren 71 und 72 angeordnet. Ferner sind die beiden rotierenden Retroreflektoren 71 und 72 des Zwischenmoduls unmittelbar neben sowie benachbart zu den zwei weiteren rotierenden Retroreflektoren 73 und 74 des Abschlußmoduls M3 in der Weise angeordnet, daß die bezüglich der eintreffenden Strahlenbündel ausgangsseitigen Aperturhälften der beiden feststehenden Retroreflektoren 81 und 82 genau bezüglich der wieder auf die eintreffenden Strahlenbündel bezogenen, eingangsseitigen Aperturhälften der zwei weiteren, rotierenden Retroreflektoren 73 und 74 des Abschlußmoduls M3 ausgerichtet sind.

Die einzelnen Komponenten der drei Module M1 bis M3 sind hinsichtlich ihrer Größe und ihrer Justierung zueinander so gewählt, daß die nachstehend beschriebene Funktionsweise in jeder Drehstellung der rotierenden Retroreflektoren 71 bis 74 gewährleistet ist. Ein symmetrisch zur Symmetrieebene I einfallendes Strahlenbündel IV trifft auf den Strahlteiler 1 auf und wird von diesem in zwei amplitudengleiche, nicht näher bezeichnete Hälften zerlegt. Die eine parallel zu der Symmetrieebene I_{'} verlaufende Strahlhälfte läuft als ein zur optischen Achse II_{1'} parallel verlaufendes Strahlenbündel über den Planspiegel 32 des Winkelspiegels 3, über den rotierenden Retroreflektor 72, den festen Retroreflektor 82 und den rotierenden Retroreflektor 74 zu der einen Seite der planparallelen Platte 4. Nach einer Reflexion an der planparalellen Platte 4 durchläuft das nicht näher bezeichnete Strahlenbündel den beschriebenen Weg in umgekehrter Richtung rückwärts bis zum Strahlteiler 1.

Die andere, ebenfalls nicht näher bezeichnete Strahlhälfte läuft über den Umlenkspiegel 2, den Planspiegel 31 des Winkelspiegels 3 als ein zu der optischen Achse II₁ parallel verlaufendes Strahlenbündel über den rotierenden Retroreflektor 71, den festen Retroreflektor 81 und den rotierenden Retroreflektor 73 zu der anderen spiegelnden Fläche der planparallelen Platte 4. Nach einer Reflexion an der planparallelen Platte 4 durchläuft das symmetrisch zur der optischen Achse II₃ reflektierte Strahlenbündel den beschriebenen Weg in umgekehrter Richtung zurück zu dem Strahlteiler 1.

An dem Strahlteiler 1 interferieren dann die beiden eintreffenden Strahlenbündel und werden über die Sammellinse 5 auf dem Strahlungsdetektor 6 fokussiert.

Hierbei ist durch die Anordnung, Justierung und Größe der einzelnen Elemente gewährleistet, daß in keiner Drehstellung der rotierenden Retroreflektoren 71 bis 74 die jeweiligen Strahlenbündel auf ihrem Weg behindert werden; ebenso ist dadurch ausgeschlossen, daß die Strahlenbündel ganz oder teilweise das modulare Interferometer verlassen.

Dies ist u.a. dadurch erreicht, daß die planparallele Platte 4 mit der Symmetrieebene I fluchtet und damit einen Winkel von 45° mit dem Strahlteiler 1 bildet, daß der Strahlteiler 1, wie in Verbindung mit dem Eingangs-/Ausgangsmodul M1 bereits ausgeführt ist, mit dem Planspiegel 31 des Winkelspiegels 3 fluchtet und parallel zu dem Umlenkspiegel 2 angeordnet ist, und daß die beiden Planspiegel 31 und 32 des Winkelspiegels 3 einen Winkel von 90° einschließen. Ferner ist wichtig, daß das einfallende Strahlenbündel IV unter 45° auf den Strahlteiler 1 auftrifft. Alle diese Maßnahmen zusammen bewirken, daß die symmetrisch zu den optischen Achsen II₃ und II_{3'} verlaufenden Strahlenbündel jeweils senkrecht auf verschiedene Seiten der planparallelen Platte 4 auftreffen und dadurch von dieser aus genau in ihren Ursprung auf dem Strahlteiler 1 zurückkehren.

Während des Betriebs rotieren die jeweils benachbarten Retroreflektoren 71 und 73 des Zwischenmoduls M2 bzw.des Abschlußmoduls M3 bezüglich ihrer Drehstellung gleichphasig und in einer Gegenphase von 180° zu den ihnen gegenüberliegenden Retroreflektoren, d.h. zu den Retroreflektoren 72 und 74 des Zwischenmoduls M2 bzw. des Abschlußmoduls M3. Durch die rotierenden Retroreflektoren 71 und 73 wird somit beispielsweise der Weg des entsprechenden Strahlenbündels verkürzt, während gleichzeitig durch die rotierenden Retroreflektoren 72 und 74 der Weg des entsprechenden Strahlenbündels verlängert wird, und umgekehrt.

Die Änderung des optischen Wegs, welche ein rotierender Retroreflektor hierbei bewirkt, ist gleich der vierfachen Änderung (je zweimal der Hin- und Rückweg durch das Interferometer) des senkrechten Abstandes der jeweiligen Symmetriezentren 71S bis 74S von der planparallelen Platte 4 bzw. von der Symmetrieebene I. Da vorzugsweise dieser Weg für die vier Retroreflektoren 71 bis 74 identisch ist, ergibt sich die gesamte optische Änderung als das Sechzehnfache der geometrischen Wegänderung eines Reflektors.

Antriebe der einzelnen Retroreflektoren 71 bis 74 sind in technisch bekannter Weise so synchronisiert, daß im Normalbetrieb für die höchste spektrale Auflösung der Wechsel zwischen dem maximalen und dem minimalen Weg in den beiden Armen des Interferometers gegenphasig, d.h. um 180° versetzt verläuft. Über die Antriebe kann darüber hinaus diese Phase von 180° bis 0° verändert werden. Hierdurch ist dann eine stufenlose Einstellung der Wegdifferenz und damit auch der spektralen Auflösung möglich. Bei einer Phase von 0° ist die Wegdifferenz null. Um konstante Signalfrequenzen zu erhalten, wird dabei die Drehgeschwindigkeit der Retroreflektoren in gleichem Maße heraufgesetzt, wie die Phase verringert wird, und umgekehrt. In diesem Zusammenhang ist auch zu beachten, daß der Fall der Phase 0° bei der Drehzahlsteuerung ausgenommen ist. In bekannter Weise sind auch der Versatz, d.h. der Abstand d der Symmetriezentren der rotierenden Retroreflektoren sowie der Neigungswinkel α der Drehachsen der einzelnen Retroreflektoren bezüglich den optischen Achsen festgelegt. Ferner sind der Strahlteiler 1, der Winkelspiegel 3 und der Umlenkspiegel 2 zueinander und zu den übrigen Elementen so justiert, daß für eine bestimmte Drehstellung der Retroreflektoren die Weglänge für die beiden Strahlenbündel gleich lang ist. Auf diese Weise ist erreicht, daß die Wegdifferenz von null, also der zentrale Maximalwert des Meßsignals des Interferogramms, erfaßt wird.

Ferner ist die planparallele Platte 4 so montiert, daß sie mechanisch oder auch elektromechanisch parallel zur Symmetrieebene I über die maximale Wegdifferenz der beiden Arme des Interferometers verschiebbar ist. Damit ist es möglich, daß zentrale Maximum in seiner Lage im zeitlichen Verlauf des Interferogramms bzw. seine Lage in Abhängigkeit von der Drehstellung der Retroreflektoren zu verschieben. Auf diese Weise wird dann ein symmetrisches Interferogramm oder auch ein Interferogramm mit einer Asymmetrie unterschiedlichen Grades erhalten. Gleichzeitig ist damit die Einstellung einer unterschiedlichen spektralen Auflösung erreicht. Mit Hilfe eines symmetrischen Interferogramms können dann in bekannter Weise Spektren berechnet werden, welche frei von Phasenfehlern sind. Ferner erfolgen eine Datenaufzeichnung und -verarbeitung bei den erfindungsgemäßen modularen Interometern ebenfalls in bekannter Weise.

Ebenso wie bei den beiden, um 90° gegeneinander versetzten Planspiegeln 31 und 32, die in dieser Anordnung den Winkelspiegel 3 bilden, können anstelle der planparallelen Platte 4 auch zwei entsprechend angeordnete Planspiegel verwendet werden. Durch die Verwendung von Einzelspiegeln ist der Fertigungsaufwand erheblich geringer und obendrein werden hinsichtlich der optischen Justierung zusätzliche Freiheitsgrade erhalten, da sich Einzelspiegel unabhängig voneinander einstellen lassen, während die Spiegelflächen der planparallelen Platte und eines starren Winkelspiegels natürlich gekoppelt sind. Anstelle der beiden festen Retroreflektoren könnten prinzipiell auch Dachkant-Innenspiegel verwendet werden. Dies hätte dann jedoch einen höheren Aufwand bei der optischen Justierung zur Folge. Ferner sind auch andere als die beschriebenen Winkel der Komponenten zueinander möglich, solange die vorstehend angeführten Bedingungen bezüglich der Strahlengänge eingehalten werden.

Um die optischen Wege in einem modularen Interferometer gemäß der Erfindung noch weiter zu verlängern, können nach dem in Fig. 3 dargestellten Zwischenmodul M2 noch ein oder mehrere, entsprechend modifizierte Zwischenmodule vorgesehen werden. Hierbei sind das oder die modifizieren Zwischenmodule so zu ändern, daß jeweils zwei den Retroreflektoren 71 und 72 entsprechende, rotierende Reflektoren jedes modifizierten Zwischenmoduls so bezüglich der zwei feststehenden Retroreflektoren 81 und 82 des vorhergehenden Zwischenmoduls M2 ausgerichtet sind, daß die beiden symmetrisch zu den optischen Achsen II₂ bzw. II_{2'} verlaufenden Strahlenbündel, d.h. daß die eintretenden sowie die austretenden Strahlenbündel der beiden feststehenden Retroreflektoren 81 und 82 jeweils als zwei separate Strahlen in den den beiden Retroreflektoren 71 und 72 entsprechenden, weiteren rotierenden Retroreflektoren des nachgeordneten Zwischenmoduls reflektiert werden. Somit können durch Zwischenschalten von dem Zwischenmodul M2 im Prinzip entsprechenden Zwischenmodulen die optischen Wegunterschiede bzw. -differenzen praktisch beliebig verlängert werden.

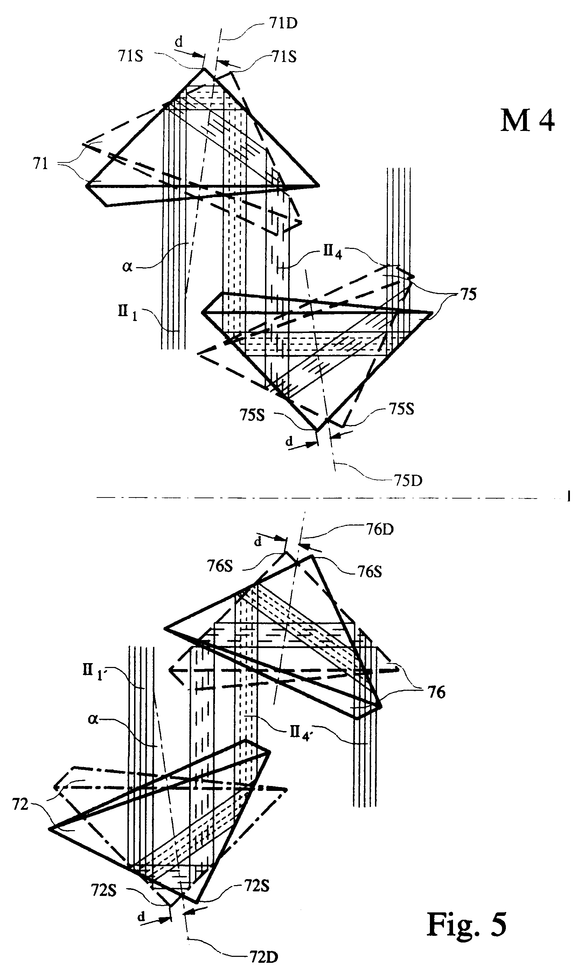

Gemäß einer bevorzugten Ausführungsform können zur weiteren Steigerung der spektralen Auflösung eines modularen Interferometers gemäß der Erfindung statt der beiden feststehenden Retroreflektoren 81 und 82 noch zwei weitere, rotierende Retroreflektoren, beispielsweise die Retroreflektoren 75 und 76 vorgesehen werden, wodurch dann ein in Fig. 5 dargestelltes, erweitertes Zwischenmodul M4 geschaffen ist. Analog den im Zwischenmodul M2 vorgesehenen, feststehenden Retroreflektoren 81 und 82 sind auch die zwei weiteren rotierenden Retroreflektoren mit ihren Rückseiten einander zugewandt und ihre Drehachsen 75D und 76D schließen mit den entsprechenden optischen Achsen II₄ bzw. II_{4'} einen Neigungswinkel α ein. und sind mit einem entsprechenden Achsversatz d gegenüber den durch die Spitzen der rotierenden Retroreflektoren 75 und 76 verlaufenden Symmetriezentren 75S und 76S angeordnet.

Die beiden rotierenden Retroreflektoren 75 und 76 werden bezüglich ihrer Drehwinkelstellung phasengleich mit den ihnen jeweils zugeordneten Retroreflektoren 71 und 72 des Moduls M4 und der Retroreflektoren 73 und 74 des Abschlußmoduls M3 angetrieben. Hierdurch wird dann deren Wirkung verstärkt, indem die Wege für die zu den optischen Achsen II₄ und II_{4'} sowie II₂ und II₂, verlaufenden Strahlenbündel verkürzt bzw. verlängert werden, und umgekehrt. Somit ergibt sich für die gesamte, optische Wegänderung das Vierundzwanzigfache der geometrischen Wegänderung eines Retroreflektors.

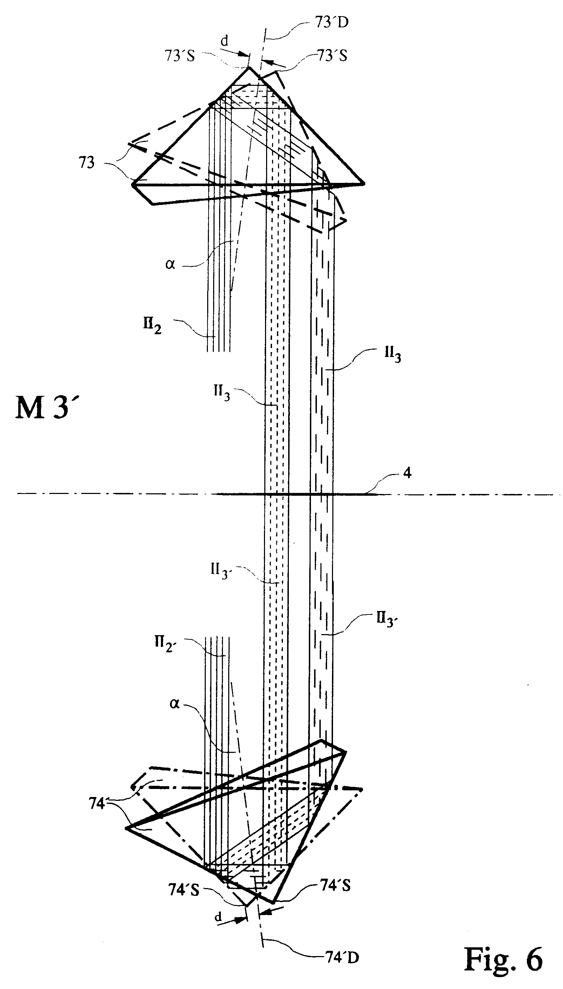

Die optische Wegdifferenz läßt sich noch weiter erhöhen, indem mehrere Zwischenmodule M4 nacheinander zwischen einem Eingangs-/Ausgangsmodul M1 und einem entsprechend Fig.6 modifizierten Abschlußmodul M3' angeordnet werden; hierbei entspricht der modifizierte Abschlußmodul M3' in seinem prinzipiellen Aufbau vollkommen dem im einzelnen beschriebenen Abschlußmodul M3. Zur Kennzeichnung der unterschiedlichen Anordnung und Ausrichtung sind die rotierenden Retroreflektoren in Fig.6 im Unterschied zu den entsprechenden Retroreflektoren in Fig.4 durch mit einem Apostroph (') versehene Bezugszeichen bezeichnet.

Eine besonders einfache, jedoch für verschiedene Anwendungsfälle durchaus ausreichende Ausführungsform eines modularen Interferometers gemäß der Erfindung kann dadurch erhalten werden, daß das in Fig.2 dargestellte Eingangs-/Ausgangsmodul M1 ohne Zwischenschaltung von Zwischenmodulen unmittelbar mit dem in Fig.6 dargestellten Abschlußmodul M3' kombiniert und fest verbunden wird.

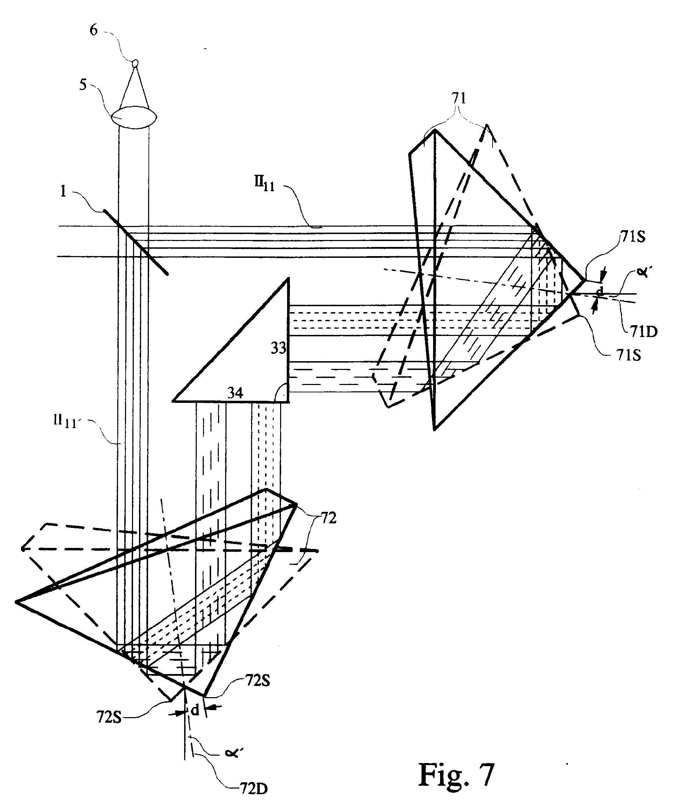

In der Ausführungsform der Fig.7 sind die Komponenten, welche die gleichen sind wie die entsprechenden Komponenten der vorstehend beschriebenen Interferometer, mit denselben Bezugszeichen bezeichnet und daher nicht noch einmal beschrieben. Ferner weist das Interferometer nach Fig.7 einen ersten festen Spiegel 33 und einen dazu senkrechten, zweiten festen Spiegel 34 auf, welche unter 45° zu dem Strahlteiler 1 angeordnet sind. Die Drehachsen 71D und 72D der beiden Retroreflektoren 71 und 72 sind bezüglich den Symmetrieachsen 71S bzw. 72S der beiden Retroreflektoren 71 und 72 seitlich um einen Abstand d versetzt und um einen Winkel α' geneigt. Bei dem in Fig.7 dargestellten Interferometer werden für die beiden Retroreflektoren 71 und 72 als Antriebe entweder jeweils nicht näher dargestellte Motore oder ein gemeinsamer, ebenfalls nicht dargestellter Motor mit zwei Kardanwellen bzw. einer Riementransmission verwendet.

Die beiden Retroreflektoren 71 und 72 sind in ihrer Winkelstellung und Drehrichtung so zueinander eingestellt, daß die hierdurch bewirkten Weglängen gegenläufig sind. Da die Einstellung während des Betriebs nicht verändert wird, ist auf diese Weise dafür gesorgt, daß die Drehbewegungen beider Retroreflektoren 71 und 72 synchron verlaufen. Hierzu sind die Antriebe in bekannter Weise entweder mechanisch oder elektrisch gekoppelt. Auf diese Weise ist erreicht, daß der optische Wegunterschied und damit die spektrale Auflösung bei unveränderter Meßzeit aufgrund der gegenläufigen Wegänderungen in den beiden Interferometerarmen bei dem Interferometer nach Fig.7 verdoppelt sind, wobei dies trotz der Verwendung der gleichen Reflektorgröße und bei gleichem geometrischen Weg erreicht ist.

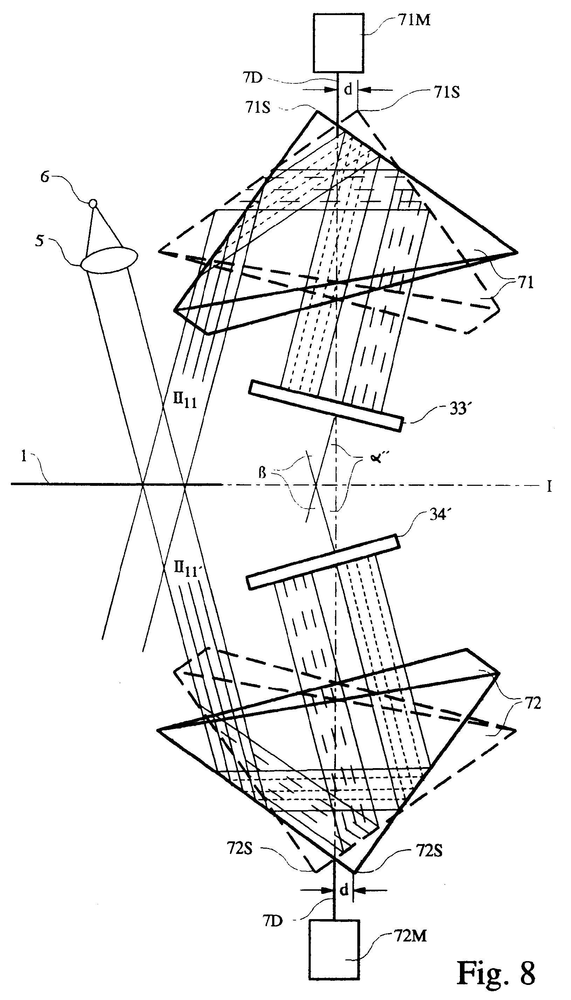

Bei der Ausführungsform eines Interferometers in Fig.8, bei welchem die Komponenten, welche die gleichen sind wie die entsprechenden Komponenten der vorstehend beschriebenen Interferometer mit denselben Bezugszeichen bezeichnet und daher nicht noch einmal beschrieben sind, sind im Unterschied zu der Ausführungsform nach Fig.7 die beiden Reflektoren 71 und 72 mit ihren Aperturen einander zugewandt und spiegelbildlich zur Symmetrieebene I angeordnet. In dieser Symmetrieebene I ist, seitlich versetzt zu den beiden Retroreflektoren 71 und 72, der Strahlteiler 1 angeordnet. Zwischen den beiden Retroreflektoren 71 und 72 sind gegenüber deren Aperturen statt der beiden festen Spiegel 33 und 34 jeweils Planspiegel 33' bzw. 34' angeordnet.

Hierbei sind die beiden Planspiegel 33' und 34' so montiert und in ihrer Größe so gewählt, daß ein Strahlenbündel II₁₁ bzw. II₁₁', welches von einem der Retroreflektoren 71 bzw. 72 kommt, in jeder Stellung der beiden Retroreflektoren 71 und 72 die Planspiegel 33' bzw. 34' vollständig, d.h. mit dem gesamten Durchmesser des jeweiligen Strahlenbündels, trifft. Die dadurch festgelegte Größe der beiden Planspiegel 33' und 34' soll jedoch zweckmäßigerweise nicht überschritten werden.

In dem Interferometer nach Fig.8 haben die beiden Retroreflektoren 71 und 72 eine gemeinsame Drehachse 7D, welche gegen das jeweilige Lot auf dem Planspiegeln 33' und 34' um einen Winkel α'' geneigt ist. Die Planspiegel 33' und 34' sind um einen Winkel β gegeneinander geneigt. Die beiden Winkel α'' und β sind in dieser Ausführungsform so bemessen, daß gilt: β = 2α''.

Auch bei dieser Ausführungsform ist die Drehachse 7D bezüglich der jeweiligen Symmetriezentren 71S und 72S der beiden Retroreflektoren 71 und 72 um den Abstand d seitlich versetzt. Die symmetrisch zur Symmetrieachse I einander gegenüberliegenden Retroreflektoren 71 und 72 rotieren also exzentrisch. Der Versatz d wird hierbei unter Berücksichtigung des jeweiligen Neigungswinkels bestimmt, so daß dann durch die Neigungswinkel und den Versatz die spektrale Auflösung des Interferometers festgelegt ist.

Bei dem Interferometer nach Fig.8 werden die beiden Retroreflektoren 71 und 72 vorzugsweise durch zwei gesonderte, schematisch angedeutete Schrittmotore 71M und 72M so angetrieben, daß die Wegänderungen gegenphasig verlaufen. Dabei ist wiederum die vorstehend beschriebene stufenlose Einstellung der Wegdifferenz und damit der spektralen Auflösung möglich. Diese wird erreicht durch Veränderung der Drehstellung der beiden Reflektoren zueinander bzw. durch Veränderung des Grades ihrer "Asynchronität" bei Phase; bei Phase 180° ist die Asynchronität maximal, ebenso die Wegdifferenz; bei Phase 0° sind beide null.

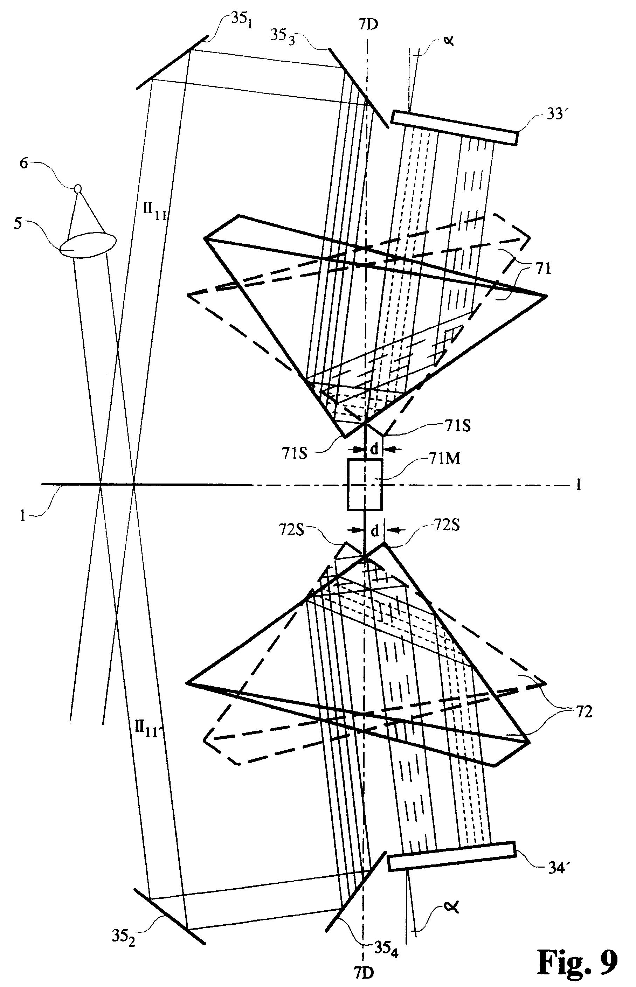

Bei einer Ausführungsform eines Interferometers nach Fig.9, in welcher ebenfalls wieder die gleichen Komponenten wie die in den vorstehend beschriebenen Ausführungsformen mit denselben Bezugszeichen bezeichnet sind, sind im Unterschied zu den Ausführungsformen in Fig.7 und 8 die beiden Retroreflektoren 71 und 72 mit ihren Außenseiten einander zugewandt und spiegelsymmetrisch zu der Symmetrieebene I angeordnet. Die beiden Planspiegel 33' und 34' sind wieder gegenüber den Aperturen der beiden Retroreflektoren 71 und 72 angeordnet. Vier Umlenkspiegel 35₁ bis 35₄ sind, wie aus Fig.9 zu ersehen, so angeordnet, daß die vom Strahlteiler 1 kommenden Strahlenbündel II₁₁ und II₁₁' entsprechend dem eingetragenen Verlauf zurück zu dem Strahlteiler kommen.

Bei der Ausführungsform des Interferometers nach Fig.9 können die Reflektoren 71 und 72 auch starr mit je einem der beiden Wellenenden eines durch einen Block angedeuteten Motors 7M verbunden sein, wobei dann die Welle des Motors 7M mit der Drehachse 7A zusammenfällt.

Die beschriebene modulare Ausführung des erfindungsgemäßen Interferometers ermöglicht somit durch ihre Flexibiltät die Realisierung praktisch aller gewünschter spektralen Auflösungen. Durch eine beliebige Aneinandereihung von Zwischenmodulen ist somit bei dem erfindungsgemäßen, modularen Interferometer die bisherige Beschränkung der spektralen Auflösung überwunden und aufgehoben. Ein besonderer Vorteil der Erfindung ist darin zu sehen, daß die spektrale Auflösung bei einer unveränderten Meßzeit aufgrund der gegenläufigen Wegänderungen in den beiden Interferometerarmen vervielfacht wird. Folglich muß auch die Rotationsgeschwindigkeit nicht erhöht werden, was sich wiederum hinsichtlich der Auswuchtung der gesamten Anordnung vorteilhaft auswirkt. Somit besteht auch die Möglichkeit, durch Verwendung einer größeren Anzahl von Zwischenmodulen die Meßgeschwindigkeit bei gleicher Drehzahl der rotierenden Retroreflektoren und bei gleicher spektraler Auflösung zu vervielfachen.

Dieser Vorteil ist im Vergleich zu dem klassischen Interferometer nach Michelson, bei welchem translatorisch bewegte Spiegel verwendet werden, besonders ausgeprägt. Bei den klassischen Interferometern war eine hohe spektrale Auflösung bei gleichzeitig kurzer Meßzeit nur durch eine hohe Spiegelgeschwindigkeit zu erreichen. Hierbei treten jedoch dann durch das Anfahren und Abbremsen der Spiegel hohe wechselnde Beschleunigungen auf. Im Unterschied hierzu sind bei dem erfindungsgemäßen modularen Interferometer die spektrale Auflösung und die Meßzeit voneinander unabhängig; obendrein gibt es keine wechselnde Beschleunigung, da die Retroreflektoren kontinuierlich rotieren.

## Patentansprüche

1. Interferometer nach Michelson zur Erzeugung optischer Wegunterschiede,
mit einem im Betrieb rotierenden Retroreflektor (71), einem Strahlteiler (1), einem Umlenkspiegel (2), einem außen verspiegelten Winkelspiegel (3) in Form von zwei um 90° gegeneinander versetzten Planspiegeln, einer beidseitig verspiegelten, planparallelen Platte (4), einer Sammellinse (5) und einem Strahlungsdetektor (6),
wobei
aus dem Strahlteiler (1), dem Umlenkspiegel (2), dem außen verspiegelten Winkelspiegel (3), der Sammellinse (5) und dem Strahlungsdetektor (6) ein Eingangs-/Ausgangsmodul (M1) gebildet ist, in welchem der eine Planspiegel (31) des Winkelspiegels (3) mit dem Strahlteiler (1) fluchtet, der parallel zu dem Umlenkspiegel (2) und gleichzeitig unter einem Winkel von 45° bezüglich einer Symmetrieebene (I) angeordnet ist, während der andere Planspiegel (32) des Winkelspiegels (3) senkrecht zu dem Strahlteiler (1) angeordnet ist,
aus dem einem rotierenden Retroreflektor (71), einem zweiten rotierenden Retroreflektor (72) und zwei zusätzlichen Retroreflektoren (81, 82) ein Zwischenmodul (M2) gebildet ist, in welchem die zwei, spiegelbildlich zur Symmetrieebene (I) angeordneten, rotierenden Retroreflektoren (71, 72) mit ihren Aperturen einander zugewandt sind, in welchem die zwei zusätzlichen, ebenfalls spiegelbildlich zur Symmetrieebene (I) angeordneten Retroreflektoren (81, 82) mit ihren Rückseiten einander zugewandt und deren eingangsseitigen Aperturhälften jeweils auf eine der ausgangsseitigen Aperturhälften der zwei rotierenden Retroreflektoren (71,72) hin ausgerichtet sind, und in welchem die Drehachsen (71D, 72D) der beiden rotierenden Retroreflektoren (71, 72) jeweils bezüglich der in der Retroreflektorenspitze liegenden Zentren (71S, 72S) der rotierenden Retroreflektoren (71, 72) seitlich um den gleichen Abstand (d) versetzt sowie um einen Winkel (α) gegenüber der jeweiligen optischen Achse (II₂, II_{2'}) der rotierenden Retroreflektoren (71, 72) geneigt sind,
aus zwei weiteren rotierenden Retroreflektoren (73, 74) und aus der beidseitig verspiegelten, planparallelen Platte (4) ein Abschlußmodul (M3) gebildet ist, in welchem die zwei weiteren, spiegelbildlich zur Symmetrieebene (I) angeordneten, rotierenden Retroreflektoren (73, 74) mit ihren Aperturen einander zugeordnet sind, in welchem eine ausgangsseitige Hälfte der beiden rotierenden Retroreflektoren (73, 74) jeweils gegenüber der entsprechenden Spiegelfläche der in der Symmetrieebene (I) liegenden, planparallelen Platte (4) angeordnet ist, und in welchem die Drehachsen (73D, 74D) der beiden weiteren rotierenden Retroreflektoren (73, 74) jeweils bezüglich der in der Retroreflektorenspitze liegenden Zentren (73S, 74S) der weiteren rotierenden Retroreflektoren (73, 74) seitlich um den gleichen Abstand (d) versetzt sowie um einen Winkel (α) gegenüber der jeweiligen optischen Achse (II₃, II_{3'}) der rotierenden Retroreflektoren (73, 74) geneigt sind, und
die drei Module in Form des Eingangs-/Ausgangsmoduls (M1), des Zwischenmoduls (M2) und des Abschlußmoduls (M3) in einer festen Verbindung so zu einem Interferometer zusammengesetzt sind, daß die um 90° gegeneinander versetzten Planspiegel (31, 32) des Winkelspiegels (3) des Eingangs-/Ausgangsmoduls (M1) jeweils gegenüber einer eingangsseitigen Hälfte der zwei rotierenden Retroreflektoren (71, 72) des Zwischenmoduls (M2) und zwischen diesen angeordnet sind, und daß die zwei rotierenden Retroreflektoren (71, 72) des Zwischenmoduls (M2) unmittelbar neben und benachbart zu den zwei weiteren rotierenden Retroreflektoren (73, 74) des Abschlußmoduls (M3) so angeordnet sind, daß die ausgangsseitigen Aperturhälften der beiden feststehenden Retroreflektoren (81, 82) gegenüber den eingangsseitigen Aperturhälften der zwei weiteren rotierenden Retroreflektoren (73, 74) des Abschlußmoduls (M3) ausgerichtet sind, wobei die jeweils benachbarten, rotierenden Retroreflektoren (71, 73; 72, 74) der fest miteinander verbundenen Module (M1, M2, M3) im Betrieb bezüglich ihrer Drehwinkelstellung gleichphasig und bezüglich der jeweils gegenüberliegenden Retroreflektoren (71, 72; 73, 74) in Gegenphase von 180° rotieren.

2. Interferometer nach Anspruch 1,
dadurch **gekennzeichnet**,
daß zur Verlängerung der optischen Wegunterschiede nach dem Zwischenmodul (M2) und vor dem Abschlußmodul (M3) noch ein oder mehrere modifizierte Zwischenmodule vorgesehen sind, welche dahingehend modifiziert sind, daß jeweils zwei weitere rotierende Retroreflektoren jedes modifizierten Zwischenmoduls so bezüglich der zwei feststehenden Retroreflektoren (81, 82) des vorhergehenden Zwischenmoduls ausgerichtet sind, daß die austretenden Strahlenbündel der beiden feststehenden Retroreflektoren (81, 82) des jeweils vorherigen Zwischenmoduls als zwei separate Strahlen in den entsprechenden, zwei weiteren rotierenden Retroreflektoren des nachgeordneten Zwischenmoduls reflektiert werden.

3. Interferometer nach Anspruch 1, dadurch **gekennzeichnet**, daß zur Steigerung der spektralen Auflösung statt der beiden zusätzlichen Retroreflektoren (81, 82) ein Zwischenmodul (M4) noch zwei weitere im Betrieb rotierende, mit ihrer Rückseite einander zugewandte Retroreflektoren (75, 76) mit einem entsprechenden Neigungswinkel (α) ihrer Drehachsen (75D, 76D) bezüglich der optischen Achsen (II₄, II_{4'}) und mit einem entsprechenden Achsversatz (d) gegenüber ihren in der Retroreflektorenspitze liegenden Zentren (75S, 76S) aufweist, wobei im Betrieb die mit ihrer Rückseite einander zugewandten Retroreflektoren (75, 76) jeweils gleichphasig bezüglich der Drehwinkelstellung mit den ihnen gegenüberliegend angeordneten Retroreflektoren (71, 72) rotieren.

4. Interferometer nach Michelson nach den Ansprüchen 1 und 3, dadurch **gekennzeichnet**, daß zur weiteren Verlängerung der optischen Wegunterschiede in einem Interferometer zwei oder mehr Zwischenmodule (M4) zwischen dem Eingangs-/Ausgangsmodul (M1) und einem Abschlußmodul (M3') vorgesehen sind.

5. Interferometer nach Michelson zur Erzeugung optischer Wegunterschiede,
mit einem im Betrieb rotierenden Retroreflektor (73') einem Strahlteiler (1), einem Umlenkspiegel (2), einem außen verspiegelten Winkelspiegel (3) in Form von zwei um 90° gegeneinander versetzten Planspiegeln, einer beidseitig verspiegelten, planparallelen Platte (4), einer Sammellinse (5) und einem Strahlungsdetektor (6),
wobei
aus dem Strahlteiler (1), dem Umlenkspiegel (2), dem außen verspiegelten Winkelspiegel (3), der Sammellinse (5) und dem Strahlungsdetektor (6) ein Eingangs-/Ausgangsmodul (M1) gebildet ist, in welchem der eine Planspiegel (31) des Winkelspiegels (3) mit dem Strahlteiler (1) fluchtet, der parallel zu dem Umlenkspiegel (2) und gleichzeitig unter einem Winkel von 45° bezüglich einer Symmetrieebene (I) angeordnet ist, während der andere Planspiegel (32) des Winkelspiegels (3) senkrecht zu dem Strahlteiler (1) angeordnet ist,
aus dem einen rotierenden Retroreflektor (73'), einem zweiten rotierenden Retroreflektor (74') und aus der beidseitig verspiegelten, planparallelen Platte (4) ein Abschlußmodul (M3') gebildet ist, in welchem die beiden spiegelbildlich zur Symmetrieebene (I) angeordneten, rotierenden Retroreflektoren (73',74') mit ihren Aperturen einander zugeordnet sind, in welchem eine ausgangsseitige Hälfte der beiden rotierenden Retroreflektoren (73',74') jeweils gegenüber der entsprechenden Spiegelfläche der in der Symmetrieebene (I) liegenden, planparallelen Platte (4) angeordnet ist, und in welchem die Drehachsen (73'D, 74'D) der beiden rotierenden Retroreflektoren (73',74') jeweils bezüglich der in der Retroreflektorenspitze liegenden Zentren (73'S,74'S) der rotierenden Retroreflektoren (73', 74') seitlich um den gleichen Abstand (d) versetzt sowie um einen Winkel (α) gegenüber der jeweiligen optischen Achse (II₃, II_{3'}) der rotierenden Reflektoren (73',74') geneigt sind, und
die beiden Module in Form des Eingangs-/Ausgangsmoduls (M1) und des Abschlußmoduls (M3') in fester Verbindung so zu einem Interferometer zusammengesetzt sind, daß die um 90° gegeneinander versetzten Planspiegel (31, 32) des Winkelspiegels (3) jeweils gegenüber einer eingangsseitigen Hälfte der beiden rotierenden Retroreflektoren (73' 74') und zwischen diesen (73',74') angeordnet sind, und die beiden Retroreflektoren (73',74') im Betrieb bezüglich ihrer Drehwinkelstellung in Gegenphase von 180° rotieren.

6. Interferometer nach Michelson zur Erzeugung optischer Wegunterschiede, mit einem im Betrieb rotierenden Retroreflektor (71), einem Strahlteiler (1), einem ersten festen Planspiegel (33') und einem zweiten festen Planspiegel (34'),
wobei
ein zweiter rotierender Retroreflektor (72) vorgesehen ist,
die beiden spiegelsymmetrisch zu ihrer Symmetrieebene (I) angeordneten Retroreflektoren (71,72) mit ihren Aperturseiten einander zugewandt sind und eine gemeinsame Drehachse (7D) haben, welche gegen das jeweilige Lot auf die beiden Planspiegel (33',34') um einen Winkel (α'') geneigt ist, und welche bezogen auf die jeweiligen in der Retroreflektorenspitze liegenden Zentrenten ( 71S, 72S) der beiden Retroreflektoren (71,72) um einen Abstand (d) seitlich versetzt ist,
gegenüber den Aperturen der beiden Retroreflektoren (71,72) je einer der beiden Planspiegel (33',34') angeordnet ist, welche um einen Winkel (β) gegeneinander geneigt sind,
der Strahlteiler (1) in der Symmetrieebene (I) seitlich versetzt zu und teilweise zwischen den Retroreflektoren (71,72) angeordnet ist,
der Strahlteiler (1) beide Planspiegel (33',34') und beide Retroreflektoren (71,72) so zueinander justiert sind, daß Strahlenbündel jeweils senkrecht auf die beiden Planspiegel (33',34') auftreffen, und die beiden von gesonderten Motoren (71M, 72M) synchron oder gegenläufig angetrieben Retroreflektoren (71,72) in ihrer Winkelstellung zueinander so justiert sind, daß in der einen Drehstellung, in welcher der Abstand von dem ersten Planspiegel (33') zu dem einen Reflektor (71) minimal ist, der Abstand von dem zweiten Planspiegel (34') zu dem zweiten Retroreflektor (72) maximal ist, so daß dadurch in dieser Stellung der Weg des einen Strahlenbündels (II₁₁) vom Strahlteiler (1) zum ersten Planspiegel (33') minimal und der entsprechende Weg des zweiten Strahlenbündels (II₁₁') zum zweiten Planspiegel (34') maximal ist.

7. Interferometer nach einem der vorhergehenden Ansprüche, dadurch **gekennzeichnet**,
daß die beiden jeweils einander zugeordneten Retroreflektoren durch gesonderte Antriebe (71M, 72M) in Rotation versetzt sind und die Antriebe synchronisiert sind,
daß zur stufenlosen Einstellung der Wegdifferenz und damit auch der spektralen Auflösung die Phase zwischen den beiden jeweils einander zugeordneten Retroreflektoren durch angesteuerte Antriebe (71M, 72M) von 180° bis 0° so einstellbar ist, daß die Drehgeschwindigkeit der Retroreflektoren (71, 72) in gleichem Maße heraufgesetzt wird, wie die Phase verringert wird, und umgekehrt.

8. Interferometer nach Anspruch 6 oder 7, dadurch **gekennzeichnet**, daß die gesonderten Antriebe (71M, 72M) der beiden Retroreflektoren (71,72) rechnergesteuerte Schrittmotoren sind.

9. Interferometer nach Anspruch 6, dadurch **gekennzeichnet**, daß die Strahlenbündel (II₁₁, II₁₁') vom Strahlteiler (1) aus über entsprechend angeordnete und justierte Umlenkspiegel (35₁ bis 35₄) in die Retroreflektoren (71,72) so geleitet sind, daß die aus den beiden Retroreflektoren (71,72) austretenden Strahlenbündel (II₁₁, II₁₁') jeweils senkrecht auf die Planspiegel (33' und 34') auftreffen.

10. Interferometer nach Anspruch 9, dadurch **gekennzeichnet**, daß die Retroreflektoren (71,72) mit ihren Aperturen voneinander abgewandt sind und ihre gemeinsame Drehachse (7D) mit der Drehachse eines gemeinsamen Antriebmotors (7M) zusammenfällt, und daß mit den beiden Wellenenden des Antriebmotors (7M) je einer der beiden Retroreflektoren (71,72) verbunden ist.

## Claims

1. A Michelson type interferometer for the generation of optical path differences
comprising a rotating retroreflector (71) in operation, a beam splitter (1), a deflection mirror (2), an externally silvered corner mirror (3) in the form of two plane mirrors offset 90° with respect to each other, a bilaterally silvered plane-parallel plate (4), a collective lens (5) and a radiation detector (6),
wherein
from the beam splitter (1), the deflection mirror (2), the externally silvered corner mirror (3), the collective lens (5) and the radiation detector (6) an input/output module (M1) is formed in which the one plane mirror (31) of the corner mirror (3) aligns with the beam splitter (1) which is arranged parallel to the deflection mirror (2) and at the same time at an angle of 45° to a symmetry plane (I) whilst the other plane mirror (32) of the corner mirror (3) is arranged perpendicularly to the beam splitter (1),
from the one rotating retroreflector (71), a second rotating retroreflector (72) and two additional retroreflectors (81, 82) an intermediate module (M2) is formed in which the two rotating retroreflectors (71, 72) arranged mirror-inverted with respect to the symmetry plane (I) face each other with their apertures, in which the two additional retroreflectors (81, 82) likewise arranged mirror-inverted with respect to the symmetry plane (I) face each other with their rear sides and have their respective input-side aperture halves aligned with one of the output-side aperture halves of the two rotating retrorefelctors (71, 72), and in which the rotation axes (71D, 72D) of the two rotating retroreflectors (71, 72) are each offset laterally by the same distance with respect to the centres (71S, 72S) lying in the apex of the retroreflector of the rotating retroreflectors (71, 72) and inclined at an angle (α) to the respective optical axis of the rotating retroreflectors (71, 72), from two further rotating retroreflectors (73, 74) and from the bilaterally silvered plane-parallel plate (4) a termination module (M3) is formed in which the two further rotating retroreflectors (73, 74) arranged mirror-inverted with respect to the symmetry plane (I) are associated with each other with their apertures, in which a respective output-side half of the two rotating retroreflectors (73, 74) is arranged opposite the corresponding reflecting surface of the plane-parallel plate (4) lying in the symmetry plane (I), and in which the rotation axes (73D, 74D) of the two further rotating retroreflectors (73, 74) are each offset laterally by the same distance (d) with respect to the centres (73S, 74S) lying in the apex of the retroreflector of the further rotating retroreflectors (73, 74) and inclined at an angle (α) to the respective optical axis of the rotating retroreflectors (73, 74), and
the three modules in the form of the input/output module (M1), the intermediate module (M2) and the termination module (M3) are combined in a fixed connection to an interferometer in such a manner that the plane mirrors (31, 32) of the corner mirror (3) of the input/output mudule (M1) offset 90° with respect to each other are each arranged opposite a respective input-side half of the two rotating retroreflectors (71, 72) of the intermediate module (M2) and between said retroreflectors (71, 72), and the two rotating retroreflectors (71, 72) of the intermediate module (M2) are arranged directly next to and adjacent the two further rotating retroreflectors (73, 74) of the termination module (M3) in such a manner that the output-side aperture halves of the two stationary retroreflectors (81, 82) are aligned opposite the input-side aperture halves of the two further rotating retroreflectors (73, 74) of the termination module (M3), the respective adjacent rotating retroreflectors (71, 73; 72, 74) of the modules (M1, M2, M3) fixedly connected to each other being in operation in-phase with respect to their rotational angle position and rotating in opposite phase of 180° with respect to the corresponding opposite retroreflectors (71, 72; 73, 74).

2. An interferometer according to claim 1,
**characterized** in
that for increasing the optical path differences after the intermediate module (M2) and before the termination module (M3) one or more modified intermediate modules are provided which are modified in that in each case two further rotating retroreflectors of each modified intermediate module are aligned with respect to the two stationary retroreflectors (81, 82) of the preceding intermediate module in such a manner that the emerging beams of the two stationary retroreflectors (81, 82) of the respective preceding intermediate module are reflected as two separate beams into the corresponding two further rotating retroreflectors of the following intermediate module.

3. An interferometer according to claim 1,
**characterized** in that to increase the spectral resolution instead of the two additional retroreflectors (81, 82) an intermediate module (M4) also comprises two further rotating retroreflectors (75, 76) in operation which face each other with their rear sides and have a corresponding inclination angle (α) of their rotation axes (75D, 76D) with respect to the optical axes (II₄, II_{4'}) and a corresponding axial offsetting (d) with respect to their centres (75S, 76S) lying in the apex of the retroreflector, and in operation the retroreflectors (75, 76) facing each other with their rear sides each rotate in phase as regards the rotation angle position with the retroreflectors (71, 72) arranged opposite them.

4. A Michelson type interferometer according to claims 1 and 3 **characterized** in that for further increasing the optical path differences in an interferometer two or more intermediate modules (M4) are provided between the input/output module (M1) and a termination module (M3').

5. A Michelson type interferometer for the generation of optical path differences
comprising a rotating retroreflector (73') in operation, a beam splitter (1), a deflection mirror (2), an externally silvered corner mirror (3) in the form of two plane mirrors at 90° to each other a bilaterally silvered plane-parallel plate (4), a collective lens (5) and a radiation detector (6) wherein
from the beam splitter (1), the deflection mirror (2), the externally silvered corner mirror (3), the collective lens (5) and the radiation detector (6) an input/output module (M1) is formed in which the one plane mirror (31) of the corner mirror (3) aligns with the beam splitter (1) which is arranged parallel to the deflection mirror (2) and simultaneously at an angle of 45° to a symmetry plane (I) whilst the other plane mirror (32) ot the corner mirror (3) is arranged perpendicularly to the beam splitter (1),
from the rotating retroreflector (73'), a second rotating retroreflector (74') and the bilaterally silvered plane-parallel plate (4) a termination module (M3') is formed in which the two rotating retroreflectors (73', 74') arranged mirror-inverted with respect to the symmetry plane (I) are associated with each other with their apertures, in which an output-side half of the two rotating retroreflectors (73', 74') is arranged opposite the respective corresponding reflecting surface of the plane-parallel plate (4) lying in the symmetry plane (I), and in which the rotating axes (73'D, 74'D) of the two rotating retroreflectors (73', 74') are each offset by the same distance (d) with respect to the centres (73'S, 74'S) lying in the apex of the retroreflector of the rotating retroreflectors (73', 74') and inclined at an angle (α) to the respective optical axis of the rotating reflectors (73', 74'), and
the two modules in the form of the input/output module (M1) and the termination module (M3') are combined in fixed connection to give an interferometer in such a manner that the plane mirrors (31, 32) of the corner mirror (3) at 90° to each other are each arranged opposite a respective input-side half of the two rotating retroreflectors (73', 74') and between the latter, and in operation the two retroreflectors rotate in opposite phase of 180° as regards their rotation angle position.

6. A Michelson type interferometer for generation of optical path differences comprising a rotating retroreflector (71) in operation, a beam splitter (1), a first stationary plane mirror (33') and a second stationary plane mirror (34)
wherein
a second rotating retroreflector (72) is provided,
the two retroreflectors (71, 72) arranged mirror-inverted with respect to their symmetry plane (I) face each other with their aperture sides and have a common rotatioin axis (7D) which is inclined to the respective vertical to the two plane mirrors (33', 34') at an angle (α'') and which is laterally offset a distance with respect to the respective centres (71S, 72S) lying in the apex of the retroreflector of the two retroreflectors (71, 72),
opposite each of the apertures of the two retroreflectors (71, 72) a respective one of the two plane mirrors (33', 34') is arranged, said mirrors being inclined to each other at an angle (β),
the beam splitter (1) is arraned in the symmetry plane (I) laterally offset and partially between the retroreflectors (71, 72), the beam splitter (1) the two plane mirrors (33', 34') and the two retroreflectors (71, 72) are adjusted with respect to each other in such a manner that respective beams are incident perpendicularly on the two plane mirrors (33', 34'), the two retroreflectors (71, 72) driven synchronously or oppositely by separate motors (71M, 72M) are adjusted in their angular position with respect to each other in such a manner that in the one rotation position in which the distance from the first plane mirror (33') to the one retroreflector (71) is a minimum, the distance from the second plane mirror (34') to the second retroreflector 72 is a maximum so that as a result in this position the path of the one beam (II₁₁) from the beam splitter (1) to the first plane mirror (33') is a minimum and the corresponding path of the second beam (II_{11'}) to the second plane mirror (34') is a maximum.

7. An interferometer according to anyone of the preceding claims, **characterized** in
that the two respective retroreflectors associated with each other are set in rotation by separate drives (71M, 72M) and the drives are synchronized, for infinitely variable adjustment of the path difference and thus also of the spectral resolution the phase between the two associated retroreflectors is adjustable by controlled drives (71M, 72M) from 180° to 0° in such a manner that the rotation speed of the retroreflectors (71, 72) is reduced to the same extent as the phase and vice-versa.

8. An interferometer according to claim 6 or 7,
**characterized** in that the separate drives (71M, 72M) of the two retroreflectors (71, 72) are computer-controlled stepping motors.

9. An interferometer according to claim 6,
**characterized** in that the beams (II₁₁, II_{11'}) from the beam splitter (1) are conducted via correspondingly arranged and adjusted deflecting mirrors (35₁ to 35₄) into the retroreflectors (71, 72) in such a manner that the beams (II₁₁, II_{11'}) emerging from the two retroreflectors (71, 72) are incident perpendicularly on the respective plane mirrors (33', 34').

10. An interferometer according to claim 9,
**characterized** in that the retroreflectors (71, 72) are turned away from each other with their apertures and their common rotation axis (7D) coincides with the rotation axis of a common drive motor (7M) and one of the two retroreflectors (71, 72) is connected to the respective one of two shaft ends of the drive motor (7M).

## Revendications

1. Interféromètre de Michelson pour la génération de trajets optiques différents,
comprenant un rétroréflecteur (71) qui tourne pendant le fonctionnement, un diviseur de faisceau (1), un miroir de déviation un miroir angulaire (3) muni à l'extérieur de couches réfléchissantes sous la forme de deux miroirs plans décalés de 90° l'un par rapport à l'autre, une plaque à plans parallèles (4) munie d'une couche réfléchissante sur ses deux côtés, une lentille convergente (5) et un détecteur de rayonnement (6),
dans lequel
un module d'entrée/sortie (M1) est constitue par le diviseur de faisceau (1), le miroir de déviation (2), le miroir angulaire (3) muni à l'extérieur de couches réfléchissantes, la lentille convergente (5) et le détecteur de rayonnement (6), module dans lequel un miroir plan (31) du miroir angulaire (3) est dispose en alignement avec le diviseur de faisceau (1), parallèlement au miroir de déviation (2) et simultanément en formant un angle de 45° avec un plan de symétrique (I), alors que l'autre miroir plan (32) du miroir angulaire (3) est perpendiculaire au diviseur de faisceau (1),
un module intermédiaire (M2) est constitué du rétroréflecteur rotatif (71),d'un second rétroréflecteur rotatif (72) et de deux rétroréflecteurs rotatifs additionnels (81, 82), dans lequel les deux rétroréflecteurs rotatifs (71, 72) disposés symétriquement par rapport au plan de symétrique (I) sont tournés l'un vers l'autre par leurs ouvertures, dans lequel les deux rétroréflecteurs (81, 82) additionnels, disposés également symétriquement par rapport au plan de symétrique (I), sont tournés l'un vers l'autre par leurs côtés arrière, et dont les moities d'ouverture situées du côté entrée sont respectivement orientées sur l'une des demi-ouvertures du côté sortie des deux rétroréflecteurs rotatifs (71, 72), et dans lequel les axes de rotation (71D, 72D) des deux rétroréflecteurs rotatifs (71, 72) sont respectivement décalés latéralement de la même distance (d) des centres (71S, 72S) situes à la pointe des rétroréflecteurs rotatifs (71, 72), de même qu'ils sont inclinés d'un angle (α) par rapport aux axes optiques respectifs (II₂, II_{2'}) des rétroréflecteurs rotatifs (71, 72),
un module terminal (M3) est formé par deux autres rétroréflecteurs rotatifs (73, 74) et par la plaque (4) à plans parallèles munis d'une couche réfléchissante sur les deux côtés, dans lequel les deux autres retroréflecteurs rotatifs (73, 74) disposes de façon symétrique par rapport au plan de symétrique (I) sont tournes l'un vers l'autre par leurs ouvertures, dans lequel une moitié située du côté sortie des deux rétroréflecteurs rotatifs (73, 74) est disposée respectivement face à la surface réfléchissante correspondante de la plaque (4) à plans parallèles située dans le plan de symétrie (I), et dans lequel les axes de rotation (73D et 74D) des deux autres rétroréflecteurs rotatifs (73, 74) sont respectivement décalés laréralement de la même distance (d) par rapport aux centres (73S, 74S) situés à la pointe des autres rétroréflecteurs rotatifs (73, 74), de même qu'ils sont inclinés d'un angle (α) par rapport aux axes optiques respectifs (II₃, II_{3'}) des rétroréflecteurs rotatifs (73, 74), et
les trois modules se présentant sous la forme du module d'entrée/sortie (M1), du module intermédiaire (M2) et du module terminal (M3) sont rassemblés par une liaison fixe pour constituer un interféromètre, les miroirs plans (31, 32) du miroir angulaire (3) du module d'entrée/sortie (M1) qui sont décalés l'un par rapport à l'autre de 90° étant disposés respectivement face à une moitié située du côté entrée des deux rétroréflecteurs rotatifs (71, 72) du module intermédiaire (M2) et entre ceux-ci, les deux rétroréflecteurs rotatifs ( 71, 72) du module intermédiaire (M2) étant disposés directement à côté et au voisinage des deux autres rétroréflecteurs rotatifs (73, 74) du module terminal (M3),de sorte que les demi-ouvertures situées du côté sortie des deux rétroréflecteurs fixes (81, 82) sont dirigées face aux demi-ouvertures situées du côté entrée des deux autres rétroréflecteurs rotatifs (73, 74) du module terminal (M3), les rétroréflecteurs rotatifs (71, 73; 72, 74) respectivement voisins des modules (M1, M2, M3) qui sont reliés fermement les uns aux autres tournant en phase en ce qui concerne leur position angulaire en rotation et en opposition de phase de 180° en ce qui concerne les rétroréflecteurs respectivement opposés (71, 72; 73, 74), en fonctionnement.

2. Interféromètre selon la revendication 1, caractérisé en ce que pour allonger les différences de chemins optiques après le module intermédiaire (M2) et avant le module terminal (M3) est ou sont en outre prévu(s) un ou plusieurs modules intermédiaires modifié(s), qui est ou sont modifié(s) en ce sens que deux autres rétroréflecteurs rotatifs de chaque module intermédiaire modifie sont respectivement orientés par rapport aux deux rétroréflecteurs fixes (81, 82) du module intermédiaire précédent de manière que les faisceaux sortants des deux rétroréflecteurs fixes (81, 82) du module intermédiaire précédant respectif soient réfléchis sous forme de deux faisceaux séparés dans les deux autres rétroreflecteurs rotatifs correspondants du module intermédiaire situé à la suite.

3. Interféromètre selon la revendication 1, caractérisé en ce que pour augmenter la définition spectrale et à la place des deux rétroréflecteurs additionnels (81, 82), un module intermédiaire (M4) comprend encore deux autres rétroréflecteurs (75, 76) tournant pendant le fonctionnement et tournés l'un vers l'autre par leurs côtés arrière, présentant un angle d'inclinaison (α) correspondant de leurs axes de rotation (75D, 76D) par rapport aux axes optiques (II₄, II_{4'}) et avec un décalage correspondant (d) de leurs axes par rapport à leurs centres (75S, 76S) situés à la pointe des rétroreflecteurs, les rétroreflecteurs (75, 76) qui sont tournes l'un vers l'autre par leurs côtés arrière tournant respectivement pendant le fonctionnement en phase en ce qui concerne leur position en rotation avec les rétroréflecteurs (71, 72) qui sont situés face à eux.

4. Interféromètre de Michelson selon les revendications 1 et 3, caractérisé en ce que pour allonger encore les différences de chemins optiques dans un interféromètre, on prévoit deux ou plusieurs modules intermédiaires(M4) entre le module d'entrée/sortie (M1) et un module terminal (M3').

5. Interféromètre de Michelson pour la génération de différences de chemins optiques.
comprenant un rétroréflecteur (73') tournant pendant le fonctionnement, un diviseur de faisceau (1), un miroir de déviation un miroir angulaire (3) muni de couches réfléchissantes à l'extérieur, sous forme de deux miroirs plans décalés de 90° l'un par rapport à l'autre, une plaque à plans parallèles (4) munie d'une couche réfléchissante sur ses deux côtés, une lentille convergente (5) et un détecteur de rayonnement (6),
dans lequel
un module d'entrée/sortie (M1) est constitue par le diviseur de faisceau (1), le miroir de déviation le miroir angulaire muni à l'extérieur de couches réfléchissantes (3), la lentille convergente (5) et le détecteur de rayonnement (6), module dans lequel un miroir plan (31) du miroir angulaire (3) est disposé en alignement avec le diviseur de faisceau (1) parallèlement au miroir de déviation (2) et simultanément en formant un angle de 45° avec un plan de symétrique (I), alors que l'autre miroir plan (32) du miroir angulaire (3) est perpendiculaire au diviseur de faisceau (1),
un module terminal (M3') est formé par le rétroréflecteur rotatif (73'), un second rétroréflecteur rotatif (74') et la plaque à plans parallèles (4) munie d'une couche réfléchissante sur ses deux côtés, dans lequel les deux rétroréflecteurs rotatifs (73', 74'), qui sont disposés symétriquement par rapport au plan de symétrique (I) sont tournés l'un vers l'autre par leurs ouvertures, dans lequel une moitié située du côté sortie des deux rétroréflecteurs rotatifs (73', 74') est disposée respectivement face à la surface réfléchissante correspondante de la plaque (4) à plans parallèles située dans le plan de symétrie (I), et dans lequel les axes de rotation (73'D, 74'D) des deux rétroréflecteurs rotatifs (73', 74') sont respectivement décalés latéralement de la même distance (d) par rapport aux centres (73'S, 74'S) situés à la pointe des rétroréflecteurs rotatifs (73', 74'), de même qu'ils sont inclines d'un angle (α) par rapport aux axes optiques respectifs (II₃, II_{3'}) des rétroréflecteurs rotatifs (73', 74'), et
les deux modules sous forme du module d'entrée/sortie (M1),et du module terminal (M3') sont rassemblés en étant fermement reliés l'un à l'autre pour former un interféromètre de manière que les miroirs plans (31, 32) du miroir angulaire (3) qui sont décalés de 90° l'un par rapport à l'autre soient disposés respectivement face à une moitié située du côté entrée des deux rétroréflecteurs rotatifs (73', 74') et entre ces derniers (73', 74'), et les deux rétroréflecteurs (73', 74') tournent pendant le fonctionnement en opposition de phase de 180° en ce qui concerne leur position angulaire en rotation.

6. Interféromètre de Michelson pour la génération de différences de chemins optiques, comprenant un rétroréflecteur rotatif (71) qui tourne pendant le fonctionnement, un diviseur de faisceau (1), un premier miroir plan fixe (33') et un second miroir plan fixe (34'), dans lequel
est prévu un second rétroréflecteur rotatif (72),
les deux rétroréflecteurs (71, 72), qui sont disposés symétriquement par rapport à leur plan de symétrique (I),sont tournés l'un vers l'autre par leurs côtés ouverts et présentent un axe de rotation commun (7D), qui est incliné d'un angle (α'') par rapport à la verticale respective des deux miroirs plans (33', 34'), et qui est décalé lateralement d'une distance (d) par rapport aux centres respectifs (71S, 72S) situés à la pointe des deux rétroréflecteurs (71, 72),
chacun des deux miroirs plans (33', 34'),qui sont inclinés l'un par rapport à l'autre sous un angle (β) est disposé face à l'une respectivement des ouvertures des deux rétroréflecteurs (71, 72),
le diviseur de faisceau (1) est monté en étant décalé latéralement dans le plan de symétrique (I) et partiellement entre les rétroréflecteurs (71, 72),
le diviseur de faisceau (1), les deux miroirs plans (33', 34') et les deux rétroréflecteurs (71, 72) sont réglés les uns par rapport aux autres de manière que les faisceaux parviennent respectivement perpendiculairemen sur les deux miroirs plans (33', 34'), et les deux rétroréflecteurs (71, 72),qui sont entraînés en synchronisme ou en sens contraire par des moteurs séparés (71M, 72M),sont réglés l'un par rapport à l'autre dans leur position angulaire de manière que dans une position de rotation dans laquelle la distance entre le premier miroir plan (33') et un rétroréflecteur (71) est minimale, la distance entre le second miroir plan (34') et le second rétroréflecteur (72) est maximale, ce qui fait que dans cette position le chemin d'un faisceau (II₁₁) entre le diviseur de faisceau (1) et le premier miroir plan (33') est minimal et le chemin correspondant du second faisceau (II_{11'}) vers le second miroir plan (34') est maximal.

7. Interféromètre selon l'une quelconque des revendications précédentes, caractérisé
en ce que les deux rétroréflecteurs tournés l'un vers l'autre sont entraînes en rotation par des mécanismes d'entraînement particuliers (71M, 72M) et les mécanismes d'entraînement sont synchronisés,
en ce que pour régler de façon continue la différence de chemin et de ce fait également la résolution spectrale, la phase entre les deux rétroreflecteurs respectivement tournés l'un vers l'autre est réglable par des mécanismes d'entraînement excités (71M, 72M) entre 180° et 0°, la vitesse de rotation des rétroreflecteurs (71, 72) étant augmentée dans la même mesure que la phase est diminuée, et inversement.

8. Interféromètre selon la revendication 6 ou 7, caractérisé en ce que les mécanismes d'entraînement particuliers (71M, 72M) des deux rétroréflecteurs (71, 72) sont des moteurs pas à pas commandés par ordinateur.

9. Interféromètre selon la revendication 6, caractérisé en ce que les faisceaux (II₁₁, II_{11'}) provenant du diviseur de faisceau (1), sont dirigés par de miroirs déviateurs (35₁ à 35₄), qui sont disposés et réglés/ de façon appropriée, vers les rétroréflecteurs (71, 72) de manière que les faisceaux (II₁₁, II_{11'}) qui sortent des deux rétroréflecteurs (71, 72) parviennent respectivement perpendiculairement sur les miroirs plans (33' et 34').

10. Interféromètre selon la revendication 9, caractérisé en ce que les rétroréflecteurs (71, 72) sont tournés à l'opposé l'un de l'autre par leurs ouvertures et leur axe de rotation commun (7D) coïncide avec l'axe de rotation d'un moteur d'entraînement commun (7M), et en ce que les deux rétroréflecteurs (71, 72) sont reliés respectivement aux deux extrémités de l'arbre du moteur d'entraînement (7M).
